# EUROPEAN PATENT APPLICATION

(11) **EP 4 760 476 A1**
(43) Date of publication of application: **17.06.2026**
(21) Application number: 23950870.8
(22) Date of filing: 29.08.2023
(51) Int. Cl.: G06F 3/14, G06F 3/048, G06N 20/00, H04W 4/80

(54) **APPARATUS FOR GENERATING PROMPT FOR INTERACTIVE ARTIFICIAL INTELLIGENCE OR METHOD THEREFOR**

(71) Applicant: LG Electronics Inc., Yeongdeungpo-gu Seoul 07336 (KR)
(72) Inventor: HEO, Seunghyun, Seoul 06772 (KR)
(74) Representative: Schott, Jakob Valentin
(86) International application number: PCT/KR2023/012783
(87) International publication number: WO 2025/047995

(57) **Abstract**

Proposed is an apparatus for generating a prompt for an interactive artificial intelligence service, and the apparatus comprises: a controller for generating the prompt; and a transceiver for transmitting the generated prompt to the interactive artificial intelligence service, wherein the controller may: receive display-related information of a display apparatus for a user; determine a display frame structure for the interactive artificial intelligence service according to the received display-related information; and generate a prompt reflecting the determined display frame structure.

## Description

### TECHNICAL FIELD

The present disclosure relates to a method for prompt generation or an apparatus therefor, and more particularly, to generation of a prompt to be used as an input for an interactive artificial intelligence service.

### BACKGROUND

Recently, in multimedia devices such as a mobile phone and a TV, a new form-factor is being discussed. The form-factor refers to a structured form of a product.

The reason why form-factor innovation is emerging as important in a display industry is because of increasing needs of a user for the form-factor that may be used freely and conveniently regardless of a use situation departing from a typical form-factor customized for a specific use environment in the past, resulted from an increase in consumer mobility, convergence between devices, a rapid progress in smartization, and the like.

For example, vertical TVs are expanding, breaking the stereotype that the TVs are viewed horizontally. The vertical TV is a product that allows the user to change a direction of a screen by reflecting characteristics of the Millennials and Gen Z who are accustomed to enjoying content on mobile. The vertical TVs are convenient because a social media or a shopping site image may be viewed easily and comments may be read while watching videos at the same time. In particular, the advantages of the vertical TV are magnified more when the vertical TV is in association with a smartphone via a near-field communication (NFC)-based mirroring function. When watching regular TV programs or movies, the TV may be switched horizontally.

As another example, a rollable TV and a foldable smartphone are similar to each other in that they both use 'flexible displays'. The flexible display literally means a flexible electronic device. To be flexible, the flexible display must first be thin. A substrate that receives information and converts the same into light must be thin and flexible so that a performance lasts for a long time without damage.

Being flexible means that the flexible display should not be greatly affected even when an impact is applied thereto. While the flexible display is bent or folded, a pressure is continuously applied to a junction. It is necessary to have excellent durability such that the inside is not damaged by such pressure, but also have a property of being easily deformed when the pressure is applied.

The flexible display is implemented based on an OLED, for example. The OLED is a display using an organic light emitting material. the organic material is relatively more flexible than an inorganic material such as a metal. Furthermore, the OLED has a thin substrate and thus is more competitive than other displays. In a case of an LCD substrate used in the past, there is a limit to reducing a thickness because liquid crystal and glass are required separately.

Finally, as a new form-factor for the TV, a demand for a TV that may be easily moved indoors and outdoors is increasing. In particular, because of the recent corona virus epidemic, the time the users stay at home is increasing, and thus, a demand for a second TV is increasing. In addition, because of an increase in population going out for camping or the like, there is a demand for the TV of the new form-factor that may be easily carried and moved.

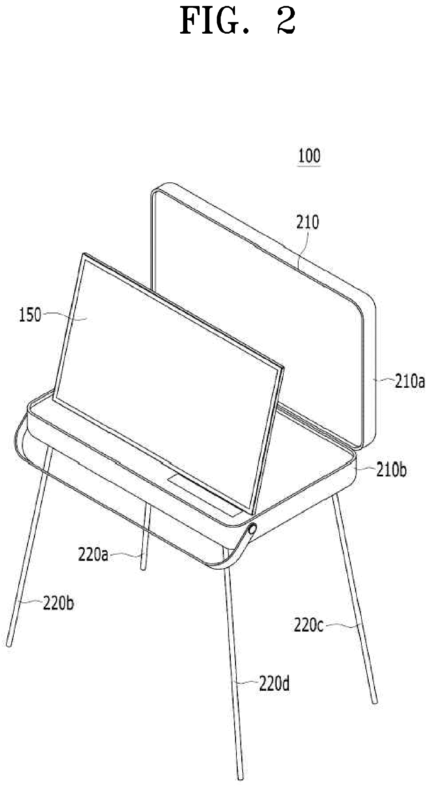

FIG. 2 illustrates an example of a television (TV) with a new form factor.

Disclosure of an interactive artificial intelligence service commonly referred to as generative artificial intelligence has caused a significant social impact. Notwithstanding such controversies, utilization of the interactive artificial intelligence service is expected to enhance user experience. However, as described above, TVs of various form factors exist, and a response to the interactive artificial intelligence service may need to be configured differently according to the form factor. Since the same operating system (OS) is installed by manufacturers according to the display size or type of a display device, the same response has conventionally been provided to the same question for the interactive artificial intelligence service without such considerations. This applies not only to a response to a question, but also to a format or a style in which the response is displayed.

For example, a display device having a small display may be suitable for reading text since a distance between a user and the device during viewing or use is short, whereas, when displaying images, space on the display needs to be used efficiently. In a display device having a large display, fine control may be difficult and consumption of text-oriented content may be inconvenient, and therefore providing results focused on images may be desirable.

In addition, for example, in the case of a rollable display, the display may operate in a state in which a portion of the display is rolled according to an operation mode, and therefore a display method of a response suitable for such a state may be required. In addition, in the case of a transparent display, display characteristics or operation modes different from those of a general (opaque) flat display may exist, and therefore a display method of a response suitable for such characteristics or operation modes may be required.

As described above, an efficient method for providing a response to an interactive artificial intelligence service in a manner suitable for a display device may be required.

### DISCLOSURE

### TECHNICAL PROBLEM

The present disclosure relates to a technology for providing a response to an interactive artificial intelligence service suitable for a user device such as a display device.

### TECHNICAL SOLUTION

An apparatus configured to generate a prompt for an interactive artificial intelligence service is provided. The apparatus includes: a controller configured to generate the prompt; and a transceiver configured to transmit the generated prompt to the interactive artificial intelligence service. The controller may be configured to: receive display-related information of a display device for a user; determine a display frame structure for the interactive artificial intelligence service according to the received display-related information; and generate a prompt reflecting the determined display frame structure.

A method for generating a prompt for an interactive artificial intelligence service is provided. The method is performed by an apparatus including a controller configured to generate the prompt and a transceiver configured to transmit the generated prompt to the interactive artificial intelligence service. The method may include: receiving display-related information of a display device for a user; determining a display frame structure for the interactive artificial intelligence service according to the received display-related information; and generating a prompt reflecting the determined display frame structure.

A computer-readable medium storing a computer program for executing a method for generating a prompt for an interactive artificial intelligence service is provided.

A system configured to generate a prompt for an interactive artificial intelligence service is provided. The system includes a client device and a server device. The client device may include: a controller configured to acquire display-related information of the client device; and a transceiver configured to transmit the display-related information to the server device. The server device may include: a transceiver configured to receive the display-related information from the client device; and a controller configured to determine a display frame type for the interactive artificial intelligence service according to the received display-related information and generate a prompt reflecting the determined display frame type.

The above-described solutions are merely some of the embodiments of the present disclosure, and various embodiments reflecting the technical features of the present disclosure may be derived and understood by those skilled in the art based on the following detailed description of the present disclosure.

### ADVANTAGEOUS EFFECTS

The present disclosure has the following effects.

According to the present disclosure, a prompt may be specified without direct input from a user.

According to the present disclosure, a structured response format may be requested, and thus, a response in a structured format may be obtained from an interactive artificial intelligence service.

According to the present disclosure, user experience may be enhanced by outputting a response suitable for a user intention.

The effects of the present disclosure are not limited to those mentioned above, and other effects not described herein will be clearly understood by those skilled in the art to which the present disclosure pertains from the following detailed description of the embodiments.

### BRIEF DESCRIPTION OF THE DRAWINGS

The accompanying drawings, which are included as part of the detailed description to assist in understanding the present disclosure, illustrate exemplary embodiments of the present disclosure and, together with the detailed description, serve to explain the technical spirit of the present disclosure.
FIG. 1 is a block diagram for explaining each component of a display device.
FIG. 2 is a diagram illustrating a display device according to an embodiment of the present disclosure.
FIGS. 3 and 4 illustrate structures of a system for an interactive artificial intelligence service according to the present disclosure.
FIG. 5 illustrates a block diagram of a prompt generation device according to the present disclosure.
FIG. 6 illustrates a plurality of display frame structure types according to the present disclosure.
FIGS. 7 and 8 illustrate examples of response configurations for a user question or query.
FIGS. 9 and 10 illustrate examples of response configurations for a user question or query.
FIG. 11 is a flowchart illustrating a procedure related to prompt generation and responding thereto according to an embodiment of the present disclosure.
FIG. 12 is a flowchart illustrating a procedure related to prompt generation and responding thereto according to an embodiment of the present disclosure.

### DETAILED DESCRIPTION

Hereinafter, the embodiments disclosed herein will be described in detail with reference to the accompanying drawings, but components that are the same as or similar to each other regardless of reference numerals will be given the same reference numerals, and redundant description thereof will be omitted. The suffixes "module" and "unit" for components used in the following description are given or used together in consideration of ease of writing the present document, and do not have meanings or roles that are distinct from each other by themselves. Further, in describing the embodiments disclosed herein, when it is determined that a detailed description of related known technologies may unnecessarily obscure the gist of the embodiments disclosed herein, detailed description thereof will be omitted. In addition, the attached drawings are provided for easy understanding of the embodiments disclosed herein and do not limit technical idea disclosed herein, and should be construed as including all modifications, equivalents, and alternatives falling within the spirit and scope of the present disclosure.

Although terms including ordinal numbers, such as first, second, and the like, may be used to describe various components, the components are not limited by the terms. The terms are only used to distinguish one component from another.

It should be understood that when a component is referred to as being "connected with" another component, the component may be directly connected with another component or an intervening component may also be present. In contrast, it should be understood that when a component is referred to as being "directly connected with" another component, there is no intervening component present.

A singular representation may include a plural representation unless it represents a definitely different meaning from the context.

The terms "includes" or "has" used herein should be understood as not precluding possibility of existence or addition of one or more other characteristics, figures, steps, operations, constituents, components, or combinations thereof.

In the following description, a display device 100 is referred to. However, the display device may be referred to by various names such as a television (TV) or a multimedia device, and the scope of the present disclosure is not limited by such names.

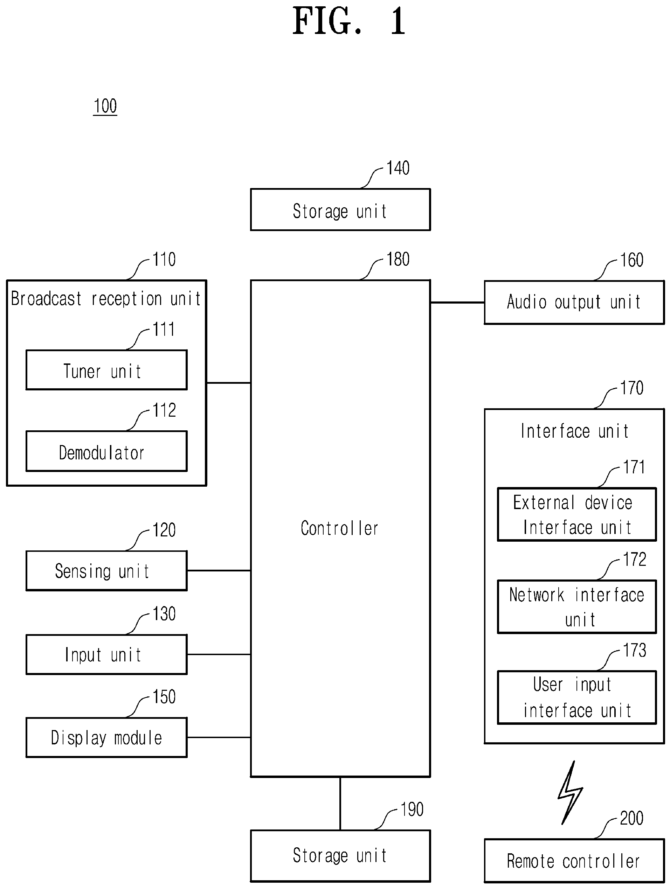

FIG. 1 is a block diagram for illustrating each component of a display device 100 according to an embodiment of the present disclosure.

The display device 100 may include a broadcast receiver 1210, an external device interface 171, a network interface 172, storage 140, a user input interface 173, an input unit 130, and a controller 180, a display module 150, an audio output unit 160, and/or a power supply 190.

The broadcast receiver 1210 may include a tuner 1211 and a demodulator 1212.

Unlike the drawing, the display device 100 may include only the external device interface 171 and the network interface 172 among the broadcast receiver 1210, the external device interface 171, and the network interface 172. That is, the display device 100 may not include the broadcast receiver 1210.

The tuner 1211 may select a broadcast signal corresponding to a channel selected by the user or all pre-stored channels among broadcast signals received via an antenna (not shown) or a cable (not shown). The tuner 1211 may convert the selected broadcast signal into an intermediate-frequency signal or a base band image or audio signal.

For example, when the selected broadcast signal is a digital broadcast signal, the tuner 1211 may convert the digital broadcast signal into a digital IF signal (DIF), and when the selected broadcast signal is an analog broadcast signal, the tuner 1211 may convert the analog broadcast signal into an analog base band image or audio signal (CVBS/SIF). That is, the tuner 1211 may process the digital broadcast signal or the analog broadcast signal. The analog base band image or audio signal (CVBS/SIF) output from the tuner 1211 may be directly input to the controller 180.

In one example, the tuner 1211 may sequentially select broadcast signals of all stored broadcast channels via a channel memory function among the received broadcast signals, and convert the selected signals into the intermediate-frequency signal or the base band image or audio signal.

In one example, the tuner 1211 may include a plurality of tuners to receive broadcast signals of a plurality of channels. Alternatively, the tuner 1211 may be a single tuner that simultaneously receives the broadcast signals of the plurality of channels.

The demodulator 1212 may receive the digital IF signal (DIF) converted by the tuner 1211 and perform a demodulation operation. The demodulator 1212 may output a stream signal (TS) after performing demodulation and channel decoding. In this regard, the stream signal may be a signal in which an image signal, an audio signal, or a data signal is multiplexed.

The stream signal output from the demodulator 1212 may be input to the controller 180. The controller 180 may output an image via the display module 150 and output an audio via the audio output unit 160 after performing demultiplexing, image/audio signal processing, and the like.

A sensing unit 120 refers to a device that senses a change in the display device 100 or an external change. For example, the sensing unit 120 may include at least one of a proximity sensor, an illumination sensor, a touch sensor, an infrared (IR) sensor, an ultrasonic sensor, an optical sensor (e.g., a camera), a voice sensor (e.g., a microphone), a battery gauge, and an environment sensor (e.g., a hygrometer, a thermometer, and the like).

The controller 180 may check a state of the display device 100 based on information collected by the sensing unit 120, and when a problem occurs, the controller 180 may notify the user of the problem or may make adjustments on its own to control the display device 100 to maintain the best state.

In addition, a content, an image quality, a size, and the like of the image provided by the display module 150 may be controlled differently based on a viewer sensed by the sensing unit, a surrounding illumination, or the like to provide an optimal viewing environment. As a smart TV progresses, the number of functions of the display device increases and the number of sensing units 20 also increases together.

The input unit 130 may be disposed at one side of a main body of the display device 100. For example, the input unit 130 may include a touch pad, a physical button, and the like. The input unit 130 may receive various user commands related to an operation of the display device 100 and transmit a control signal corresponding to the input command to the controller 180.

Recently, as a size of a bezel of the display device 100 decreases, the number of display devices 100 in a form in which the input unit 130 in a form of a physical button exposed to the outside is minimized is increasing. Instead, the minimized physical button may be located on a rear surface or a side surface of the display device 100, and a user input may be received from a remote control device 200 via the touch pad or the user input interface 173 to be described later.

The storage 140 may store programs for processing and controlling each signal in the controller 180, or may store signal-processed image, audio, or data signals. For example, the storage 140 may store application programs designed for the purpose of performing various tasks processable by the controller 180, and may selectively provide some of the stored application programs upon request from the controller 180.

The programs stored in the storage 140 are not particularly limited as long as they may be executed by the controller 180. The storage 140 may also perform a function for temporarily storing the image, audio, or data signals received from an external device via the external device interface 171. The storage 140 may store information on a predetermined broadcast channel via the channel memory function such as a channel map.

FIG. 1 shows an embodiment in which the storage 140 is disposed separately from the controller 180, but the scope of the present disclosure is not limited thereto, and the storage 140 is able to be included in the controller 180.

The storage 140 may include at least one of a volatile memory (e.g., a DRAM, a SRAM, a SDRAM, and the like) or a non-volatile memory (e.g., a flash memory, a hard disk drive (HDD), a solid-state drive (SSD), and the like).

The display module 150 may generate a driving signal by converting the image signal, the data signal, an OSD signal, and a control signal processed by the controller 180 or the image signal, the data signal, a control signal, and the like received from the interface 171. The display module 150 may include the display panel 11 having the plurality of pixels.

The plurality of pixels disposed on the display panel may include RGB sub-pixels. Alternatively, the plurality of pixels disposed on the display panel may include RGBW sub-pixels. The display module 150 may generate driving signals for the plurality of pixels by converting the image signal, the data signal, the OSD signal, the control signal, and the like processed by the controller 180.

The display module 150 may be a plasma display panel (PDP), a liquid crystal display (LCD), an organic light emitting diode (OLED), a flexible display module, and the like, or may be a three-dimensional (3D) display module. The 3D display module 150 may be classified into a non-glasses type and a glasses type.

The display device 100 includes the display module that occupies most of the front surface thereof and a casing that covers a rear surface, a side surface, and the like of the display module and packages the display module.

Recently, the display device 100 may use the display module 150 that may be bent such as the light emitting diode (LED) or the organic light emitting diode (OLED) to realize a curved screen in addition to a flat screen.

The LCD, which was mainly used in the past, received light via a backlight unit because it was difficult for the LCD to emit light on its own. The backlight unit is a device that uniformly supplies light supplied from a light source to a liquid crystal located in the front. As the backlight unit became thinner, it was possible to realize a thin LCD, but it was difficult to implement the backlight unit with a flexible material, and when the backlight unit is bent, it was difficult to uniformly supply the light to the liquid crystal, resulting in a change in brightness of the screen.

On the other hand, the LED or the OLED may be implemented to be bendable because each element constituting the pixel emits light on its own and thus the backlight unit is not used. In addition, because each element emits light on its own, even when a positional relationship with a neighboring element changes, brightness thereof is not affected, so that the display module 150 that is bendable using the LED or the OLED may be implemented.

The organic light emitting diode (OLED) panel appeared in earnest in mid-2010 and is rapidly replacing the LCD in a small and medium-sized display market. The OLED is a display made using a self-luminous phenomenon of emitting light when current flows through a fluorescent organic compound. The OLED has a higher image quality response speed than the LCD, so that there is almost no afterimage when realizing a moving image.

The OLED is a light-emitting display product that uses three types (red, green, and blue) of phosphor organic compounds having a self-luminous function, and uses a phenomenon in which electrons and positively charged particles injected from a cathode and an anode are combined with each other within an organic material to emit light by itself, so that there is no need for a backlight (a backlight device) that deteriorates color.

The light emitting diode (LED) panel, as a technology that uses one LED element as one pixel, may reduce a size of the LED element compared to the prior art, and thus, may implement the display module 150 that is bendable. A device referred to as an LED TV in the past only used the LED as the light source for the backlight unit that supplies the light to the LCD, and the LED itself was not able to constitute the screen.

The display module includes the display panel, and a coupling magnet, a first power supply, and a first signal module positioned on a rear surface of the display panel. The display panel may include a plurality of pixels R, G, and B. The plurality of pixels R, G, and B may be formed in respective areas where multiple data lines and multiple gate lines intersect each other. The plurality of pixels R, G, and B may be disposed or arranged in a matrix form.

For example, the plurality of pixels R, G, and B may include a red (hereinafter, 'R') sub-pixel, a green ('G') sub-pixel, and a blue ('B') sub-pixel. The plurality of pixels R, G, and B may further include a white (hereinafter, 'W') sub-pixel.

In the display module 150, a side on which the image is displayed may be referred to as a front side or a front surface. When the display module 150 displays the image, a side on which the image is not able to be observed may be referred to as a rear side or a rear surface.

In one example, the display module 150 may be constructed as the touch screen and may be used as the input device in addition to the output device.

The audio output unit 160 receives an audio-processed signal from the controller 180 and outputs the received signal as the audio.

An interface 170 serves as a passage for various types of external devices connected to the display device 100. The interface may be in a wireless scheme using the antenna as well as a wired scheme of transmitting and receiving data via the cable.

The interface 170 may include at least one of a wired/wireless headset port, an external charger port, a wired/wireless data port, a memory card port, a port for connecting a device having an identification module, an audio input/output (I/O) port, a video input/output (I/O) port, and an earphone port.

An example of the wireless scheme may include the broadcast receiver 1210 described above, and may include not only the broadcast signal, but also a mobile communication signal, a short-distance communication signal, a wireless Internet signal, and the like.

The external device interface 171 may transmit or receive data with a connected external device. To this end, the external device interface 171 may include an A/V input/output unit (not shown).

The external device interface 171 may be connected to the external device such as a digital versatile disk (DVD), a Bluray, a game console, a camera, a camcorder, a computer (a laptop), a set-top box, and the like in a wired/wireless manner, and may perform input/output operations with the external device.

In addition, the external device interface 171 may establish a communication network with various remote control devices 200 to receive a control signal related to the operation of the display device 100 from the remote control device 200 or to transmit data related to the operation of the display device 100 to the remote control device 200.

The external device interface 171 may include a wireless communication unit (not shown) for short-range wireless communication with other electronic devices. With such a wireless communication unit (not shown), the external device interface 171 may exchange data with an adjacent mobile terminal. In particular, the external device interface 171 may receive device information, running application information, an application image, and the like from the mobile terminal in a mirroring mode.

The network interface 172 may provide an interface for connecting the display device 100 to a wired/wireless network including an Internet network. For example, the network interface 172 may receive content or data provided by the Internet, a content provider, or a network operator via the network. In one example, the network interface 172 may include a communication module (not shown) for connection to the wired/wireless network.

The external device interface 171 and/or the network interface 172 may include a communication module for the short-range communication such as a wireless fidelity (Wi-Fi), a Bluetooth, a Bluetooth low energy (BLE), a Zigbee, and a near field communication (NFC), a communication module for cellular communication such as a long-term evolution (LTE), an LTE advance (LTE-A), a code division multiple access (CDMA), a wideband CDMA (WCDMA), a universal mobile telecommunications system (UMTS), and a wireless broadband (WiBro), and the like.

The user input interface 173 may transmit a signal input by the user to the controller 180 or transmit a signal from the controller 180 to the user. For example, a user input signal such as power ON/OFF, channel selection, screen setting, and the like may be transmitted/received to/from the remote control device 200, a user input signal input from a local key (not shown) such as a power key, a channel key, a volume key, a setting value, and the like may be transmitted to the controller 180, a user input signal input from a sensor unit (not shown) that senses a gesture of the user may be transmitted to the controller 180, or a signal from the controller 180 may be transmitted to the sensor unit.

The controller 180 may include at least one processor, and may control overall operations of the display device 100 using the processor included therein. In this regard, the processor may be a general processor such as a central processing unit (CPU). In one example, the processor may be a dedicated device such as an ASIC or a processor based on other hardware.

The controller 180 may demultiplex the stream input via the tuner 1211, the demodulator 1212, the external device interface 171, or the network interface 172, or process a demultiplexed signal to generate or output a signal for image or audio output.

The image signal image-processed by the controller 180 may be input to the display module 150 and displayed as an image corresponding to the corresponding image signal. In addition, the image signal image-processed by the controller 180 may be input to an external output device via the external device interface 171.

The audio signal processed by the controller 180 may be output as the audio via the audio output unit 160. In addition, the audio signal processed by the controller 180 may be input to the external output device via the external device interface 171. In addition, the controller 180 may include a demultiplexer, an image processor, and the like.

In addition, the controller 180 may control overall operations within the display device 100. For example, the controller 180 may control the tuner 1211 to select (tune) a broadcast corresponding to the channel selected by the user or the pre-stored channel.

In addition, the controller 180 may control the display device 100 in response to a user command input via the user input interface 173 or by an internal program. In one example, the controller 180 may control the display module 150 to display the image. In this regard, the image displayed on the display module 150 may be a still image or a moving image, and may be a 2D image or a 3D image.

In one example, the controller 180 may allow a predetermined 2D object to be displayed within the image displayed on the display module 150. For example, the object may be at least one of a connected web screen (a newspaper, a magazine, and the like), an electronic program guide (EPG), various menus, a widget, an icon, the still image, the moving image, and a text.

In one example, the controller 180 may modulate and/or demodulate a signal using an amplitude shift keying (ASK) scheme. Here, the amplitude shift keying (ASK) scheme may refer to a scheme of modulating the signal by varying an amplitude of a carrier wave based on a data value or restoring an analog signal to a digital data value based on to the amplitude of the carrier wave.

For example, the controller 180 may modulate the image signal using the amplitude shift keying (ASK) scheme and transmit the modulated image signal via a wireless communication module.

For example, the controller 180 may demodulate and process the image signal received via the wireless communication module using the amplitude shift keying (ASK) scheme.

Therefore, the display device 100 may easily transmit and receive a signal with another image display device disposed adjacent thereto without using a unique identifier such as a media access control address (MAC address) or a complex communication protocol such as TCP/IP.

In one example, the display device 100 may further include a photographing unit (not shown). The photographing unit may photograph the user. The photographing unit may be implemented with one camera, but may not be limited thereto, and may be implemented with a plurality of cameras. In one example, the photographing unit may be embedded in the display device 100 or disposed separately upwardly of the display module 150. Information on the image photographed by the photographing unit may be input to the controller 180.

The controller 180 may recognize a location of the user based on the image photographed by the photographing unit. For example, the controller 180 may identify a distance between the user and the display device 100 (a z-axis coordinate). In addition, the controller 180 may determine an x-axis coordinate and a y-axis coordinate within the display module 150 corresponding to the location of the user.

The controller 180 may sense the gesture of the user based on the image photographed by the photographing unit or the signal sensed by the sensor unit, or a combination thereof.

The power supply 190 may supply the corresponding power throughout the display device 100. In particular, the power may be supplied to the controller 180 that may be implemented in a form of a system on chip (SOC), the display module 150 for displaying the image, the audio output unit 160 for outputting the audio, and the like.

Specifically, the power supply 190 may include a converter (not shown) that converts AC power to DC power and a Dc/Dc converter (not shown) that converts a level of the DC power.

In one example, the power supply 190 serves to receive the power from the outside and distribute the power to each component. The power supply 190 may use a scheme of supplying the AC power in direct connection to an external power source, and may include a power supply 190 that may be charged and used by including a battery.

In a case of the former, the power supply is used in connection with the cable, and has difficulties in moving or is limited in a movement range. In a case of the latter, the movement is free, but a weight and a volume of the power supply increase as much as those of the battery, and the power supply must be directly connected to a power cable for a certain period of time for charging or coupled to a charging cradle (not shown) that supplies the power.

The charging cradle may be connected to the display device via a terminal exposed to the outside, or the built-in battery may be charged using a wireless scheme when approaching the charging cradle.

The remote control device 200 may transmit the user input to the user input interface 173. To this end, the remote control device 200 may use the Bluetooth, a radio frequency (RF) communication, an infrared radiation (IR) communication, an ultra-wideband (UWB), the ZigBee, or the like. In addition, the remote control device 200 may receive the image, audio, or data signal output from the user input interface 173 and display the same thereon or output the same as audio.

In one example, the display device 100 described above may be a fixed or mobile digital broadcast receiver that may receive a digital broadcast.

The block diagram of the display device 100 shown in FIG. 1 is only a block diagram for one embodiment of the present disclosure, and each component of the block diagram is able to be integrated, added, or omitted based on specifications of the display device 100 that is actually implemented.

That is, when necessary, two or more components may be combined to each other into one component, or one component may be subdivided into two or more components. In addition, functions performed in each block are for illustrating the embodiment of the present disclosure, and a specific operation or a device thereof does not limit the scope of rights of the present disclosure.

FIG. 2 is a diagram showing a display device according to an embodiment of the present disclosure. Hereinafter, redundant descriptions duplicate with the above descriptions will be omitted.

Referring to FIG. 2, the display device 100 has the display module 150 accommodated inside a housing 210. In this regard, the housing 210 may include an upper casing 210a and a lower casing 210b, and the upper casing 210a and the lower casing 210b may have a structure of being opened and closed.

In one embodiment, the audio output unit 160 may be included in the upper casing 210a of the display device 100, and the main board that is the controller 180, a power board, the power supply 190, the battery, the interface 170, the sensing unit 120, and the input unit (including the local key) 130 may be accommodated in the lower casing 210b. In this regard, the interface 170 may include a Wi-Fi module, a Bluetooth module, an NFC module, and the like for the communication with the external device, and the sensing unit 120 may include an illuminance sensor and an IR sensor.

In one embodiment, the display module 150 may include a DC-DC board, a sensor, and a low voltage differential signaling (LVDS) conversion board.

In addition, in one embodiment, the display device 100 may further include four detachable legs 220a, 220b, 220c, and 220d. In this regard, the four legs 220a, 220b, 220c, and 220d may be attached to the lower casing 210b to space the display device 100 from the floor.

The display device illustrated in FIG. 2 is exemplary, and a display device to which the present disclosure may be applied includes not only a display device having a new form factor, but also a display device of an existing form factor including a general flat-panel TV. In addition, a display device according to the present disclosure includes a display device including a rollable display and/or a transparent display.

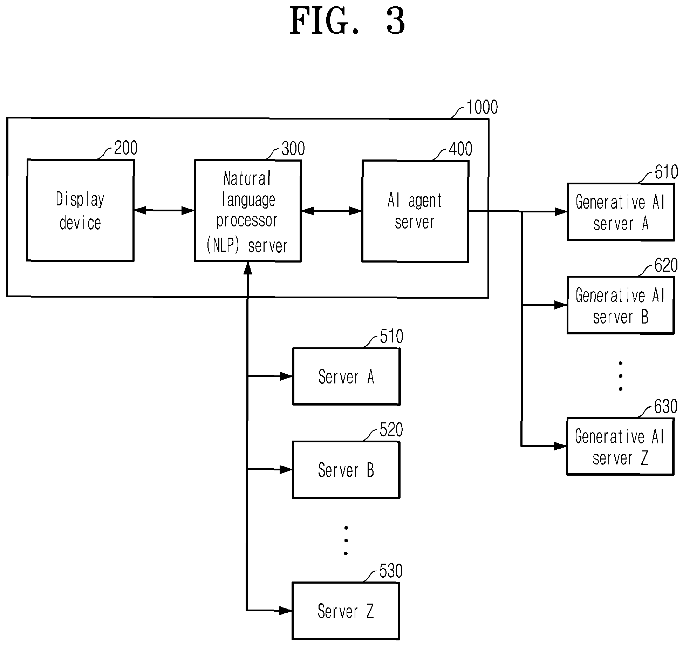

Hereinafter, the proposed technology will be described with reference to FIGS. 3 to 12.

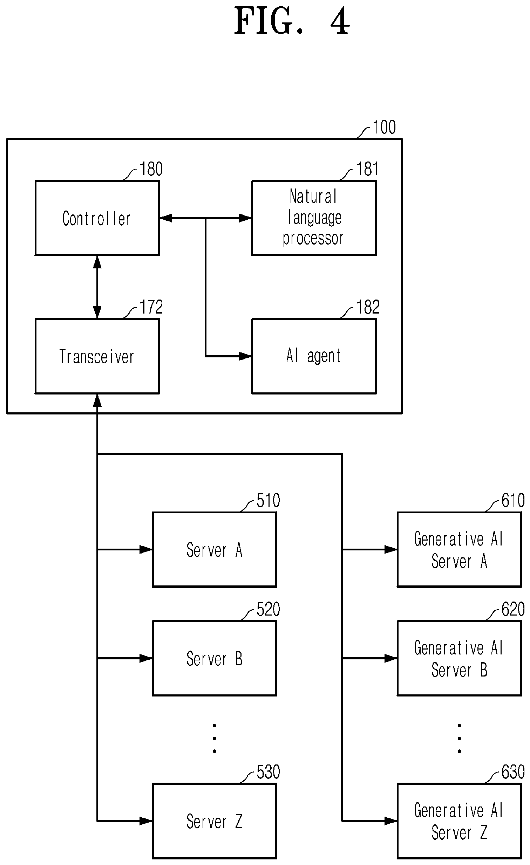

FIGS. 3 and 4 illustrate structures of a system for an interactive artificial intelligence service according to the present disclosure.

FIG. 3 illustrates a structure of a system 1000 in which the display device 100 cooperates with a natural language processing server 300, an artificial intelligence agent server 400, and servers 510, 520, and 530 such as search servers on the Internet to generate a prompt for the interactive artificial intelligence service. The display device 100 of FIG. 3 may include other components of FIG. 1 that are not illustrated.

The natural language processing server 300 analyzes an intention of a user based on a user question, query, or request converted into text (characters). The natural language processing server 300 determines whether to use the artificial intelligence agent server 400 according to the analyzed user intention. The natural language processing server 300 may interact with external servers A 510 to Z 530 to analyze the user intention or to determine whether to use the artificial intelligence agent server 400. The external servers A 510 to Z 530 may include servers of portal sites that provide various services including search services.

The artificial intelligence agent server 400 generates a prompt and determines which generative artificial intelligence (AI) server (610 to 630) is to be used. A generative AI server may include, for example, a server that generates content (responses) specialized for text (characters) and a server that generates content (responses) specialized for images (videos).

Although a natural language processing server device 300 and an AI agent server device 400 are illustrated as separate components, the present disclosure may be implemented in a form in which the natural language processing server device 300 and the AI agent server device 400 are integrated into a single server.

Referring to FIG. 4, unlike FIG. 3, a natural language processor 181 and an AI agent 182 are embedded in the display device 100. The natural language processor 181 and the AI agent 182 illustrated in FIG. 4 are implemented by embedding the servers 300 and 400 of FIG. 3 into the display device 100, and perform prompt generation for an interactive AI service according to the present disclosure. Operations or functions of the natural language processor 181 and the AI agent 182 may be the same as those of the server devices 300 and 400 illustrated in FIG. 3.

Although the natural language processor 181 and the AI agent 182 are illustrated as separate components, the present disclosure may be implemented in a form in which the natural language processor 181 and the AI agent 182 are embedded in the controller 180 of the display device 100.

In the following description, the present disclosure will be described based on the system illustrated in FIG. 3. The AI agent server 400 is referred to as a prompt generation device 400 in the present specification.

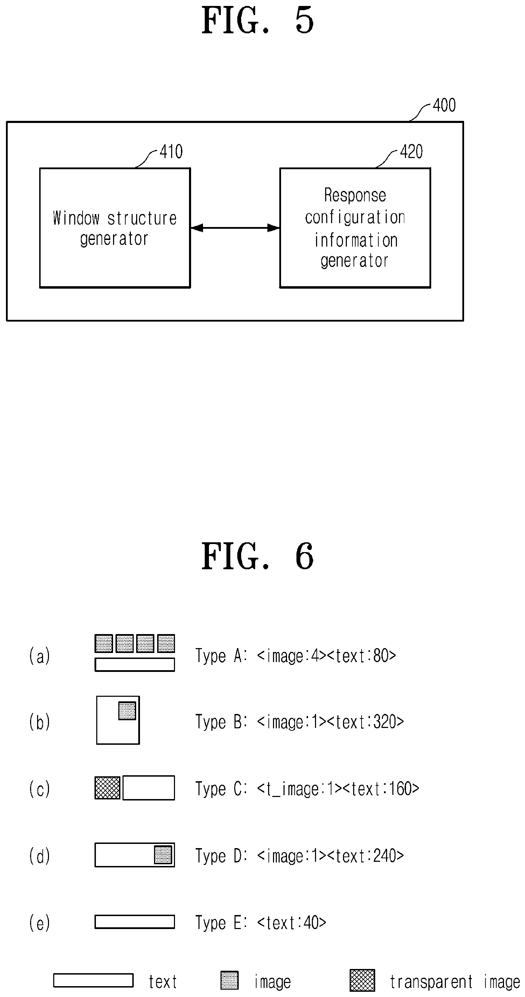

FIG. 5 illustrates a block diagram of the prompt generation device 400 according to the present disclosure. The prompt generation device 400 generates a prompt for an interactive AI service.

The prompt generation device 400 may include a window structure generator 410 and a response configuration information generator 420. Alternatively, the prompt generation device 400 may include a controller (not illustrated), and functions and operations of the window structure generator 410 and the response configuration information generator 420 may be embedded in the controller.

The window structure generator 410 receives display-related information of a display device for a user. The display-related information may include at least display resolution and display size. The display-related information may further include information on whether a display is transparent or whether a display is rollable. In addition, the display-related information may further include information on a landscape mode or a portrait mode of a display.

The window structure generator 410 determines a display frame structure for the interactive AI service based on the received display-related information. The display frame structure relates to a method of displaying information such as a response to an interactive AI service on a display, and includes information on the number or length, size, and arrangement of information (for example, text and images) displayed on the display. The display frame structure will be described with reference to FIG. 6.

FIG. 6 illustrates a plurality of display frame structure types according to the present disclosure. Each of FIG. 6(a) to of FIG. 6(e) represents a display frame structure. The display frame structure includes information on the number, size, and arrangement (or position) of text (characters), images, and/or transparent images.

Referring to FIG. 6, each display frame structure type may be defined by the number of images or the length of text. However, the display frame structure includes information on the size of images and text (or the size of a display area in which images and text may be displayed) and the arrangement (or the position) of images and text.

As described above, the display frame structure according to the present disclosure is intended to efficiently display information according to the size, type, or characteristics of a display. Accordingly, a display frame structure (or a type thereof) matching display-related information may be configured.

When the window structure generator 410 determines the display frame structure, the determination may be based not only on the received display-related information but also on keywords of a user query, question, or request that serves as a basis for prompt generation, or a user intention obtained therefrom. That is, the window structure generator 410 may determine the display frame structure additionally based on the keywords of the user query, question, or request, or the user intention obtained therefrom.

This means, for example, that even when display-related information is the same, that is, when a response to an interactive AI service is displayed through the same display device, different display frame structures may be used according to a keyword or a user intention. This may serve as a factor for increasing satisfaction of a user with a service.

The window structure generator 410 generates a prompt reflecting the determined display frame structure. For example, in addition to a sentence or an expression related to a keyword, the prompt includes a request for a response format suitable for a display structure type, such as "Please provide a response with N images and less than M characters of text."

Thereafter, the window structure generator 410 transmits the generated prompt to an interactive AI service and receives a response to the prompt from the interactive AI service.

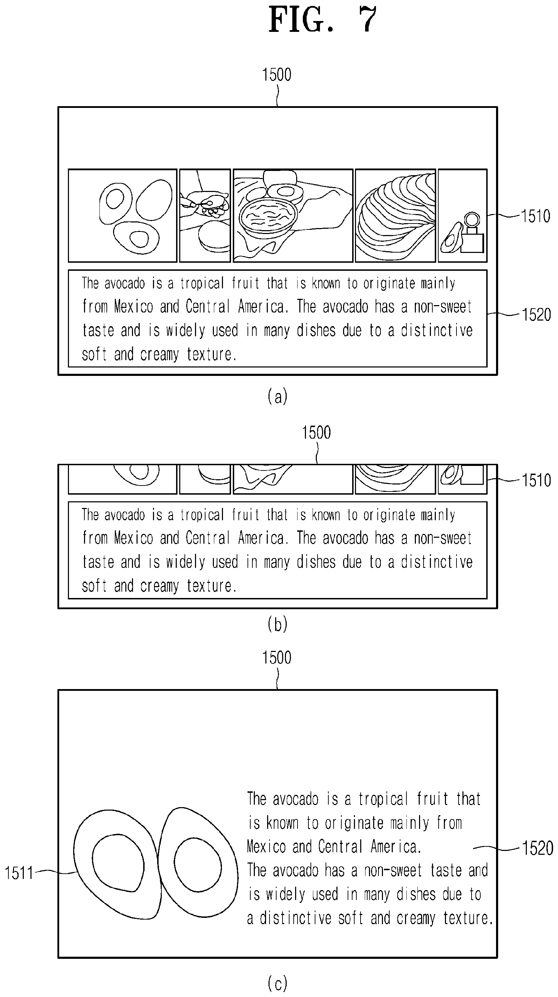

The response configuration information generator 420 may generate response configuration information such that the response to the prompt is suitable for the display frame structure. The response configuration information includes a configuration of a screen 1500 displayed on the display, as illustrated in FIGS. 7 to 10.

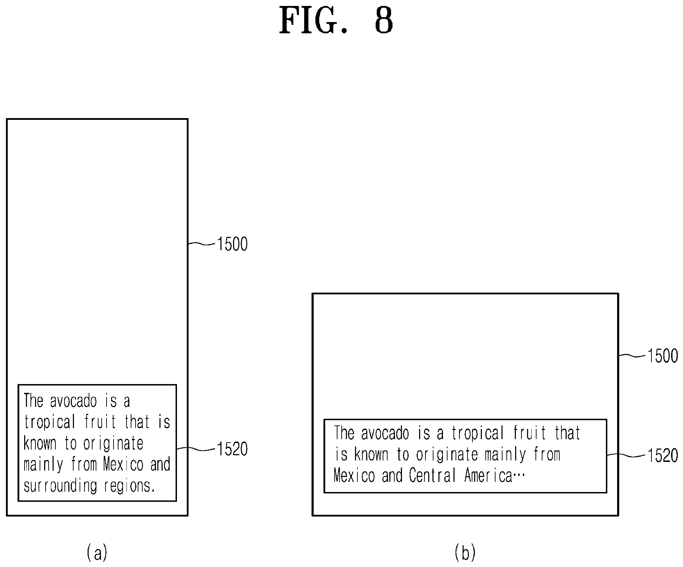

FIGS. 7 and 8 illustrate examples of response configurations for a user question or query. For example, a user question is a request for an introduction to an avocado.

FIG. 7(a) is for a device having a large display, FIG. 7(b) is for a device having a rollable display, and FIG. 7(c) is for a device having a transparent display. Each response configuration includes an image portion 1510, an image portion 1511, and a text portion 1520.

FIG. 8(a) is for a device having a small display in a portrait mode, and FIG. 8(b) is for a device having a small display in a landscape mode. Each response configuration consists only of a text portion 1520.

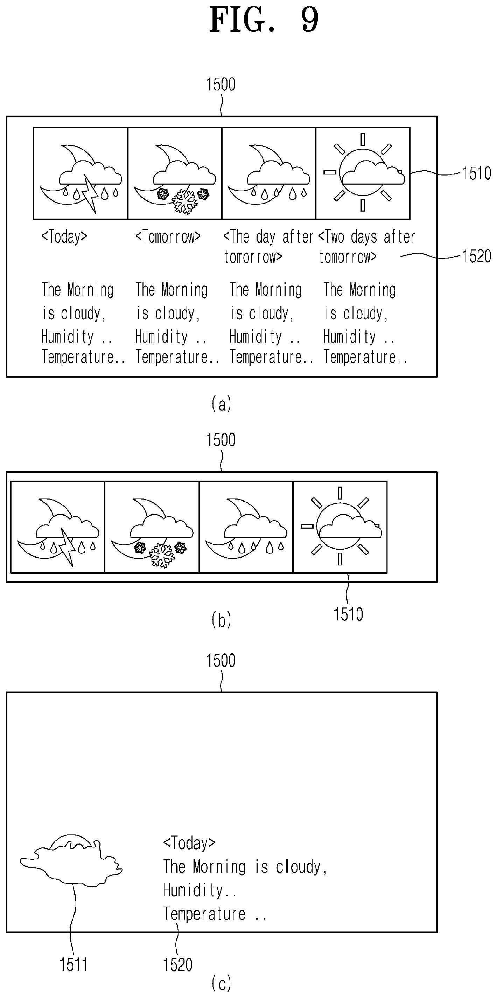

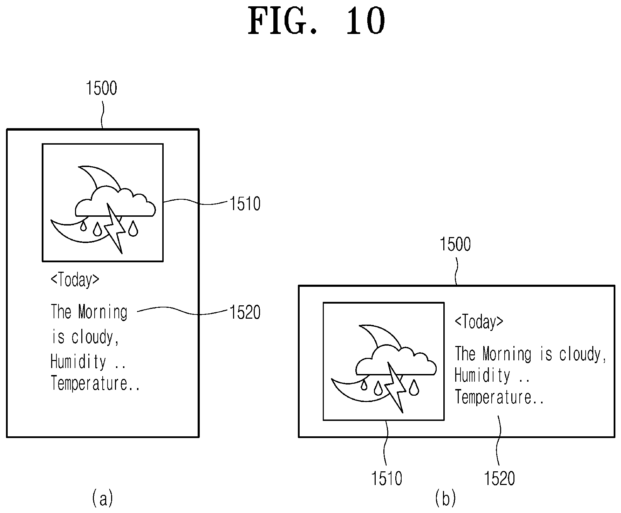

FIGS. 9 and 10 illustrate examples of response configurations for a question or query requesting weather information. For example, a user question or query is a request for weather information.

FIG. 9(a) is for a device having a large display, FIG. 9(b) is for a device having a rollable display, and FIG. 9(c) is for a device having a transparent display. Response configurations of FIGS. 9(a) and (c) include an image portion, 1510 an image portion 1511, and a text portion 1520, and a response configuration of FIG. 9(b) includes only an image portion 1510.

FIG. 10(a) is for a device having a small display in a portrait mode, and FIG. 10(b) is for a device having a small display in a landscape mode. Each response configuration includes an image portion 1510 and a text portion 1520.

Referring to the examples of the response configurations illustrated in FIGS. 7 to 10, even when the size or resolution of a display, or whether a display is rollable, is the same (FIG. 7(b) and FIG. 9(b), and FIGS. 8 and 10), different response configurations may be provided. This is because the display frame structure is determined additionally based on a keyword or a user intention as described above. Referring to FIG. 9(b), text information is not included in the display frame structure. That is, since weather forecasts may be understood using only weather symbols, the display frame structure includes only images.

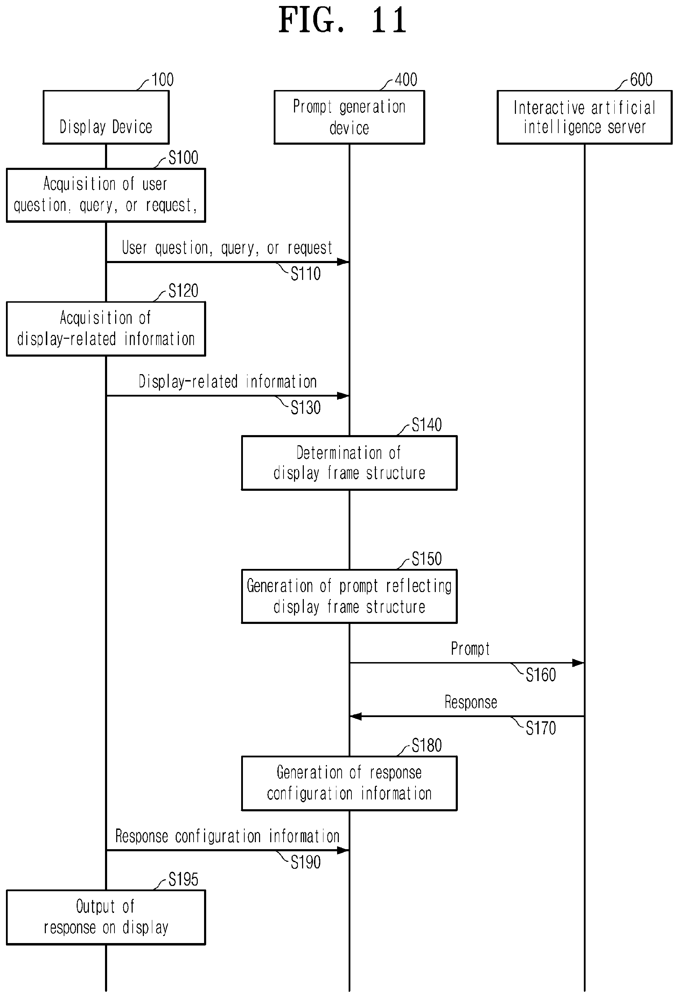

FIG. 11 is a flowchart illustrating a procedure related to prompt generation and responding thereto according to an embodiment of the present disclosure. The display device 100 is an example of a user device, and the term does not limit the scope of the present disclosure. The display device 100 includes a user input interface for receiving an input such as a question, a query, or a request from a user, and a display for outputting a response thereto.

The display device 100 acquires a user question, query, or request (S100). The display device transmits the user question, query, or request to the prompt generation device 400 (S110). Alternatively, the display device 100 may extract a keyword from the user question, query, or request and transmit the extracted keyword to the prompt generation device 400.

Although S100 and S110 are illustrated as being performed first in the flowchart, S100 and S110 only need to be performed before S140 or S150.

The display device 100 acquires display-related information (S120). The display-related information may include at least display resolution and display size. The display-related information may further include information on whether a display is transparent or whether a display is rollable. In addition, the display-related information may further include information on a landscape mode or a portrait mode of a display.

The display-related information is configured as a display information set including at least display resolution and display size. The display-related information may include two or more display information sets.

For example, when the display is a rollable display, the display-related information may include n sets (n is an integer of 2 or more), each set being composed of {display resolution, display size}. Since the display size changes according to a rolled state of the rollable display and the resolution may change correspondingly, the display-related information may include at least two information sets each composed of {display resolution, display size}.

The display device 100 transmits the acquired display-related information to the prompt generation device 400 (S130).

The prompt generation device 400 determines a display frame structure for an interactive AI service according to the received display-related information (S140). The prompt generation device 400 may determine the display frame structure additionally based on the keyword of the user query, question, or request that serves as a basis for prompt generation, or a user intention obtained therefrom.

The prompt generation device 400 generates a prompt reflecting the display frame structure (S150). Specifically, in addition to a sentence or an expression composed of the keyword, the prompt may include a request for a response format that represents the display frame structure, such as the number of images or the length of text.

The prompt generation device 400 may transmit the generated prompt to an interactive AI server 600 (S160). Thereafter, the prompt generation device 400 may receive a response to the prompt (S170).

The prompt generation device 400 may generate response configuration information such that the received response to the prompt is suitable for the display frame structure determined in S140 (S180).

The prompt generation device 400 may transmit the response configuration information to the display device 100 (S190).

The display device 100 may appropriately output a response on the display based on the received response configuration information (S195).

The procedure according to the flowchart of FIG. 11 may be performed by a single system including the display device 100 and the prompt generation device 400 on a network connected to the display device 100 via wired or wireless communication (that is, the two devices cooperate). The prompt generation device 400 also includes components corresponding to at least some of the components of the display device 100 described with reference to FIG. 1.

When the present disclosure is implemented through cooperation between the display device 100 and the prompt generation device 400, the display device 100 may be referred to as a client device, and the prompt generation device 400 may be referred to as a server device.

As described with reference to FIG. 3, the present disclosure may be performed by the system 1000. The present disclosure will be described with respect to a case in which the display device 100, the natural language processing server 300, and the prompt generation device 400 are configured as a single system 1000.

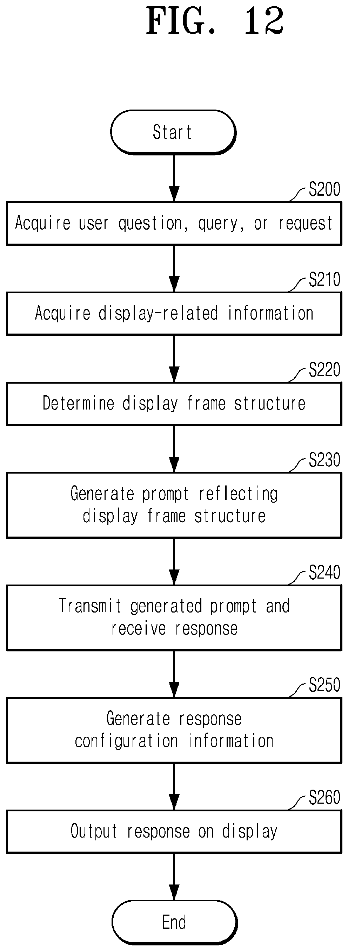

FIG. 12 is a flowchart illustrating a procedure related to prompt generation and responding thereto according to an embodiment of the present disclosure.

The system 1000 acquires a user question, query, or request (S200). The system 1000 may extract a keyword from the user question, query, or request.

Although S200 is illustrated as being performed first in the flowchart, S200 only needs to be performed before S220 or S230.

The system 1000 acquires display-related information (S210). The display-related information may include at least display resolution and display size. The display-related information may further include information on whether a display is transparent or whether a display is rollable. In addition, the display-related information may further include information on a landscape mode or a portrait mode of a display.

The display-related information is configured as a display information set including at least display resolution and display size. The display-related information may include two or more display information sets.

The system 1000 determines a display frame structure for an interactive AI service according to the display-related information (S220). The system 1000 may determine the display frame structure additionally based on the keyword of the user query, question, or request that serves as a basis for prompt generation, or a user intention obtained therefrom.

The system 1000 generates a prompt reflecting the display frame structure (S230). Specifically, in addition to a sentence or an expression composed of the keyword, the prompt may include a request for a response format that represents the display frame structure, such as the number of images or the length of text.

The system 1000 may transmit the generated prompt to the interactive AI server 600 and receive a response to the prompt (S240).

The system 1000 may generate response configuration information such that the received response to the prompt is suitable for the display frame structure determined in S220 (S250).

The system 1000 may appropriately output a response on the display based on the response configuration information (S260).

When the system 1000 is configured, the display device 100 and the natural language processing server 300 may constitute the system 1000. This will be described below.

The system 1000 acquires a user question, query, or request (S200). The system 1000 may extract a keyword from the user question, query, or request.

Although S200 is illustrated as being performed first in the flowchart, S200 only needs to be performed before S220 or S230.

The system 1000 acquires display-related information (S210). The display-related information may include at least display resolution and display size. The display-related information may further include information on whether a display is transparent or whether a display is rollable. In addition, the display-related information may further include information on a landscape mode or a portrait mode of a display.

The display-related information is configured as a display information set including at least display resolution and display size. The display-related information may include two or more display information sets.

The system 1000 may transmit the display-related information to the prompt generation device 400.

The prompt generation device 400 determines a display frame structure for an interactive AI service according to the received display-related information (S220). The prompt generation device 400 may determine the display frame structure additionally based on the keyword of the user query, question, or request that serves as a basis for prompt generation, or a user intention obtained therefrom. For this purpose, the system 1000 may provide the prompt generation device 400 with information on the keyword of the user query, question, or request that serves as a basis for prompt generation, or a user intention obtained therefrom.

The prompt generation device 400 generates a prompt reflecting the determined display frame structure (S230). Specifically, in addition to a sentence or an expression composed of the keyword, the prompt may include a request for a response format that represents the display frame structure, such as the number of images or the length of text.

After generating the prompt or before generating the prompt, the prompt generation device 400 may determine which generative AI server (610 to 630) is to be used. The prompt generation device 400 may determine which generative AI server (610 to 630) is to be used based on a user intention.

The prompt generation device 400 transmits the generated prompt to the interactive AI service and receives a response to the generated prompt from the interactive AI service (S240).

The prompt generation device 400 may generate response configuration information such that the received response to the prompt is suitable for the display frame structure determined in S220 (S250).

The prompt generation device 400 may transmit the response configuration information to the system 1000.

The system 1000 may appropriately output a response on the display based on the response configuration information (S260).

The generation of the response configuration information may be performed by the system 1000. In this case, the system 1000 may receive information on the display frame structure from the prompt generation device 400 in advance.

When the system 1000 is configured, the display device 100 and the prompt generation device 400 may constitute the system 1000. This will be described below.

The system 1000 acquires a user question, query, or request (S200). The system 1000 may extract a keyword from the user question, query, or request.

Although S200 is illustrated as being performed first in the flowchart, S200 only needs to be performed before S220 or S230.

The system 1000 acquires display-related information (S210). The display-related information may include at least display resolution and display size. The display-related information may further include information on whether a display is transparent or whether a display is rollable. In addition, the display-related information may further include information on a landscape mode or a portrait mode of a display.

The display-related information is configured as a display information set including at least display resolution and display size. The display-related information may include two or more display information sets.

The system 1000 determines a display frame structure for an interactive AI service according to the display-related information (S220). The system 1000 may determine the display frame structure additionally based on the keyword of the user query, question, or request that serves as a basis for prompt generation, or a user intention obtained therefrom. When the user intention is used, the system 1000 may transmit the user query, question, or request to the natural language processing server 300 and request analysis of the user intention from the user query, question, or request. The system 1000 may receive information on the user intention from the natural language processing server 300.

The system 1000 generates a prompt reflecting the display frame structure (S230). Specifically, in addition to a sentence or an expression composed of the keyword, the prompt may include a request for a response format that represents the display frame structure, such as the number of images or the length of text.

The system 1000 may transmit the generated prompt to the interactive AI server 600 and receive a response to the prompt (S240).

The system 1000 may generate response configuration information such that the received response to the prompt is suitable for the display frame structure determined in S220 (S250).

The system 1000 may appropriately output a response on the display based on the response configuration information (S260).

The present disclosure may be implemented through cooperation between the natural language processing server 300 and the prompt generation device 400 without the display device 100. This will be described below.

The display device 100 acquires a user question, query, or request (S200). The display device 100 may extract a keyword from the user question, query, or request.

Although S200 is illustrated as being performed first in the flowchart, S200 only needs to be performed before S220 or S230.

The display device 100 acquires display-related information (S210). The display-related information may include at least display resolution and display size. The display-related information may further include information on whether a display is transparent or whether a display is rollable. In addition, the display-related information may further include information on a landscape mode or a portrait mode of a display.

The display-related information is configured as a display information set including at least display resolution and display size. The display-related information may include two or more display information sets.

The display device 100 may transmit the display-related information to the prompt generation device 400.

The prompt generation device 400 determines a display frame structure for an interactive AI service according to the display-related information (S220). The prompt generation device 400 may determine the display frame structure additionally based on the keyword of the user query, question, or request that serves as a basis for prompt generation, or a user intention obtained therefrom. When the user intention is used, the display device 100 may transmit the user query, question, or request to the natural language processing server 300 and request analysis of the user intention from the user query, question, or request. The display device 100 may receive information on the user intention from the natural language processing server 300 and transmit the information on the user intention to the prompt generation device 400. Alternatively, the information on the user intention may be transmitted directly from the natural language processing server 300 to the prompt generation device 400.

The prompt generation device 400 generates a prompt reflecting the display frame structure (S230). Specifically, in addition to a sentence or an expression composed of the keyword, the prompt may include a request for a response format that represents the display frame structure, such as the number of images or the length of text.

The prompt generation device 400 may transmit the generated prompt to the interactive AI server 600 and receive a response to the prompt (S240).

The prompt generation device 400 may generate response configuration information such that the received response to the prompt is suitable for the display frame structure determined in S220 (S250).

The prompt generation device 400 may transmit the response configuration information to the display device 100.

The display device 100 may appropriately output a response on the display based on the response configuration information (S260).

The generation of the response configuration information may be performed by the display device 100. In this case, the display device 100 may receive information on the display frame structure from the prompt generation device 400 in advance.

Although FIG. 5 illustrates that the prompt generation device 400 is configured to include two components 410 and 420, functions or configurations of the prompt generation device 400 may be embedded in the display device 100.

The present disclosure will be described with respect to a case in which functions or configurations of the prompt generation device 400 are embedded in the display device 100. To this end, FIG. 12 will be referred to again.

The display device 100 acquires a user question, query, or request (S200). The display device 100 may extract a keyword from the user question, query, or request.

Although S200 is illustrated as being performed first in the flowchart, S200 only needs to be performed before S220 or S230.

The display device 100 acquires display-related information (S210). The display-related information may include at least display resolution and display size. The display-related information may further include information on whether a display is transparent or whether a display is rollable. In addition, the display-related information may further include information on a landscape mode or a portrait mode of a display.

The display-related information is configured as a display information set including at least display resolution and display size. The display-related information may include two or more display information sets.

The display device 100 determines a display frame structure for an interactive AI service according to the acquired display-related information (S220). The display device 100 may determine the display frame structure additionally based on the keyword of the user query, question, or request that serves as a basis for prompt generation, or a user intention obtained therefrom.

The display device 100 generates a prompt reflecting the display frame structure (S230). Specifically, in addition to a sentence or an expression composed of the keyword, the prompt may include a request for a response format representing the display frame structure, such as the number of images or the length of text.

The display device 100 may transmit the generated prompt to the interactive AI server 600 and receive a response to the prompt (S240).

The display device 100 may generate response configuration information such that received response to the prompt is suitable for the display frame structure determined in S220 (S250).

The display device 100 may appropriately output a response on the display based on the response configuration information (S260).

In another aspect of the present disclosure, the above-described proposals or operations may be provided as code that is capable of being implemented, performed, or executed by computers (herein, the computer is a comprehensive concept including a system on chip (SoC), a processor, a microprocessor etc.) or a computer-readable medium or computer program product storing or including the code. The scope of the present disclosure may be extended to the code or the computer-readable storage medium or computer program product storing or including the code.

The preferred embodiments of the present disclosure are provided to allow those skilled in the art to implement and embody the present disclosure. While the present disclosure has been described and illustrated herein with reference to the preferred embodiments thereof, it is understood to those skilled in the art that various modifications and variations could be made therein without departing from the scope of the disclosure. Therefore, the present disclosure is not limited to the embodiments disclosed herein but intends to give the broadest scope consistent with the new principles and features disclosed herein.

## Claims

1. An apparatus configured to generate a prompt for an interactive artificial intelligence service, the apparatus comprising:
a controller configured to generate the prompt; and
a transceiver configured to transmit the generated prompt to the interactive artificial intelligence service,
wherein the controller is configured to:
receive display-related information of a display device for a user;
determine a display frame structure for the interactive artificial intelligence service according to the received display-related information; and
generate a prompt reflecting the determined display frame structure.

2. The apparatus according to claim 1, wherein the controller is configured to transmit the generated prompt to the interactive artificial intelligence service, and
wherein the generated prompt includes a request for a response format corresponding to the display frame structure.

3. The apparatus of claim 2, wherein the response format includes:
text and a length of the text; and
images and a size or a number of the images.

4. The apparatus of claim 1, wherein the controller is configured to:
receive a response to the generated prompt; and
generate response configuration information suitable for a type of the display frame structure.

5. The apparatus of claim 4, wherein the controller is configured to transmit the response configuration information to the display device.

6. The apparatus of claim 1, wherein the display-related information is configured as a display information set including at least display resolution and display size, and
wherein the display-related information includes two or more display information sets.

7. The apparatus of claim 6, wherein the display-related information further includes at least one of information on whether a display is a transparent display or information on whether a display is a rollable display.

8. The apparatus of claim 1, wherein the controller is further configured to determine the display frame structure based on a keyword of the prompt or a user intention obtained therefrom.

9. A method for generating a prompt for an interactive artificial intelligence service,
wherein the method is performed by an apparatus comprising a controller configured to generate the prompt and a transceiver configured to transmit the generated prompt to the interactive artificial intelligence service,
the method comprising:
receiving display-related information of a display device for a user;
determining a display frame structure for the interactive artificial intelligence service according to the received display-related information; and
generating a prompt reflecting the determined display frame structure.

10. The method of claim 9, further comprising transmitting the generated prompt to the interactive artificial intelligence service,
wherein the generated prompt includes a request for a response format corresponding to the display frame structure.

11. The method of claim 10, wherein the response format includes:
text and a length of the text; and
images and a size or a number of the images.

12. The method of claim 9, further comprising:
receiving a response to the generated prompt; and
generating response configuration information suitable for a type of the display frame structure.

13. The method of claim 12, further comprising transmitting the response configuration information to the display device.

14. The method of claim 9,
wherein the display-related information is configured as a display information set including at least display resolution and display size, and
wherein the display-related information includes two or more display information sets.

15. The method of claim 14,
wherein the display-related information further includes at least one of information on whether a display is a transparent display or information on whether a display is a rollable display.

16. The method of claim 9, further comprising determining the display frame structure based on a keyword of the prompt or a user intention obtained therefrom.

17. A computer-readable medium storing a computer program configured to execute the method according to any one of claims 9 to 16.

18. A system configured to generate a prompt for an interactive artificial intelligence service, the system comprising a client device and a server device,
wherein the client device comprises:
a controller configured to acquire display-related information of the client device; and
a transceiver configured to transmit the display-related information to the server device, and
wherein the server device comprises:
a transceiver configured to receive the display-related information from the client device; and
a controller configured to determine a display frame type for the interactive artificial intelligence service according to the received display-related information and generate a prompt reflecting the determined display frame type.
